# EUROPÄISCHE PATENTSCHRIFT

(11) **EP 1 871 593 B1**
(45) Veröffentlichungstag und Bekanntmachung des Hinweises auf die Patenterteilung: **21.07.2010**
(21) Anmeldenummer: 06722825.4
(22) Anmeldetag: 24.04.2006
(51) Int. Cl.: B30B 9/32, B23D 31/00

(54) **PRESSE ZUM BEARBEITEN VON MATERIAL BELIEBIGER ART MIT SCHWENKBAREM PRESSFLÜGEL UND PRESSDECKEL**
PRESS FOR PROCESSING ALL TYPES OF MATERIALS AND HAVING A SWIVELLING PRESSING BLADE AND PRESSING COVER
PRESSE DESTINEE A L'USINAGE D'UN MATERIAU DE TYPE QUELCONQUE DOTEE D'UNE AILE DE PRESSE ET D'UN COUVERCLE DE PRESSE ROTATIFS

(30) Priorität: 22.04.2005 DE 102005018928
(43) Veröffentlichungstag der Anmeldung: 02.01.2008
(73) Patentinhaber: Metso Lindemann GmbH, 40231 Düsseldorf (DE)
(72) Erfinder: VAN DER BEEK, August, 41515 Grevenbroich (DE); KLOTHER, Andreas, 41564 Kaarst (DE); SCHAAF, Michael, 42699 Solingen (DE); FISCHER, Walter, 41468 Neuss (DE); PECHTEL, Harald, 41470 Neuss (DE)
(74) Vertreter: Becker, Thomas
(86) Internationale Anmeldenummer: PCT/DE2006/000707
(87) Internationale Veröffentlichungsnummer: WO 2006/111157

(56) Entgegenhaltungen:
- EP-A- 0 481 537
- WO-A-99/39900
- WO-A-03/080323
- WO-A-03/100264
- BE-A3- 1 013 357
- DE-A- 10 212 730
- DE-A1- 2 213 617
- DE-A1- 3 439 002
- DE-A1- 3 917 293
- GB-A- 1 399 049
- GB-A- 1 400 100

## Beschreibung

Die Erfindung betrifft eine Presse zum Bearbeiten, wie Pressen und/oder Scheren von Material beliebiger Art, insbesondere Metallschrott oder -abfälle, bei der das Material mittels schwenkbarem Pressflügel und schwenkbarem Pressdeckel zu einem Strang geformt wird, wie im Oberbegriff von Anspruch 1 angegeben.

Eine gattungsgemäße Presse ist aus der DE 34 39 002 C2 und der WO 03/080323 A1, die eine Presse gemäß dem Oberbegriff des Anspruchs 1 offenbart, beckannt. Die DE 22 13 617 offenbart eine fahrbare Schrottpresse. Die DE 102 12 730 A1 zeigt eine Presse zur Herstellung von Schrottpaketen durch Pressung in 3 Richtungen des Koordinatensystems.

In der Praxis hat sich gezeigt, dass der Ausgestaltung des Bettes hinsichtlich der Anordnung und Ausgestaltung des schwenkbaren Pressdeckels eine besondere Bedeutung zukommt, der in der Regel in taktweisem Zusammenwirken mit dem Seitenschieber und Schieber schon als ein Flügel gestaltet ist.

Flügelbettpressen oder Scheren verfolgen in ihrer Bettkonstruktion ein anderes Prinzip zur Pressung des Schrottstranges: Hierbei wird unter Verzicht auf einen Seitenschieber der im Querschnitt rechteckige Strang durch einen zuerst schwenkenden Flügel, der quasi den Seitenschieber ersetzt, und einen dann einschwenkenden Deckel geformt. Dieses Prinzip hat sich insbesondere für Pressen oder Scheren kleinerer Bauart bewährt.

Problematisch bei den letztgenannten Arten ist es, infolge der kinematisch und kraftmäßig entscheidenden Schwenkbewegungen, einerseits den Wirkungsgrad zu erhöhen und andererseits die Presse oder Schere mit derarti gen Betten kompakt zu bauen.

Lösungen von Schrottpressen gemäß DE 39 17 293 C3 mit Pressflügeln geben keine entsprechenden Anregungen. Die Möglichkeit, Winkelflügel in der geschlossenen Stellung zu verriegeln (DE 22 13 617 A) erlaubt' keine Anpassung an unterschiedliche Presssituationen.

Die Erfindung stellt sich die Aufgabe, eine Presse der eingangs genannten Gattung zu schaffen, die bei optimal vereinigten Funktionsabläufen eine kompakte Bauweise besitzt und in der Lage ist, neuartige Verfahrensschritte im Zusammenspiel ausgewählter Bauteile auszuführen.

Erfindungsgemäß wird dies durch die Merkmale des Anspruchs 1 gelöst. Die Erfindung wird mit Ausführungsbeispielen anhand der Zeichnungen einer Flügelbettschere näher beschrieben.

In der Zeichnung zeigen:
- Figur 1:: Das Konstruktionsprinzip einer herkömmlichen Flügelbrettpresse im Querschnitt
- Figur 2:: Eine schematische Zusammenstellung einer erfindungsgemäßen Flügelbrettpresse in perspektivischer Darstellung a) als komplette Anlage, b) mit Einzelheit der Messeranordnungen, c) im Scherenständer
- Figur 3:: Eine weitere perspektivische Darstellung zur Demonstration der Funktionsabläufe a)-c) gemäß Figur 2
- Figur 4:: Eine erfindungsgemäße Flügelbrettpresse, dargestellt im Querschnitt, in den Positionen: a) Befüllung b) Vorverdichtung durch Pressflügel c) Nachverdichtung durch Pressdeckel d) Verdichtung durch Schieber
- Figur 5:: Eine graphische Darstellung der erfindungsgemäß wirkenden Kräfte (neu) des Pressflügels/Pressdeckels im Vergleich zu den wirkenden Kräften vorbekannter Ausführungen (alt).

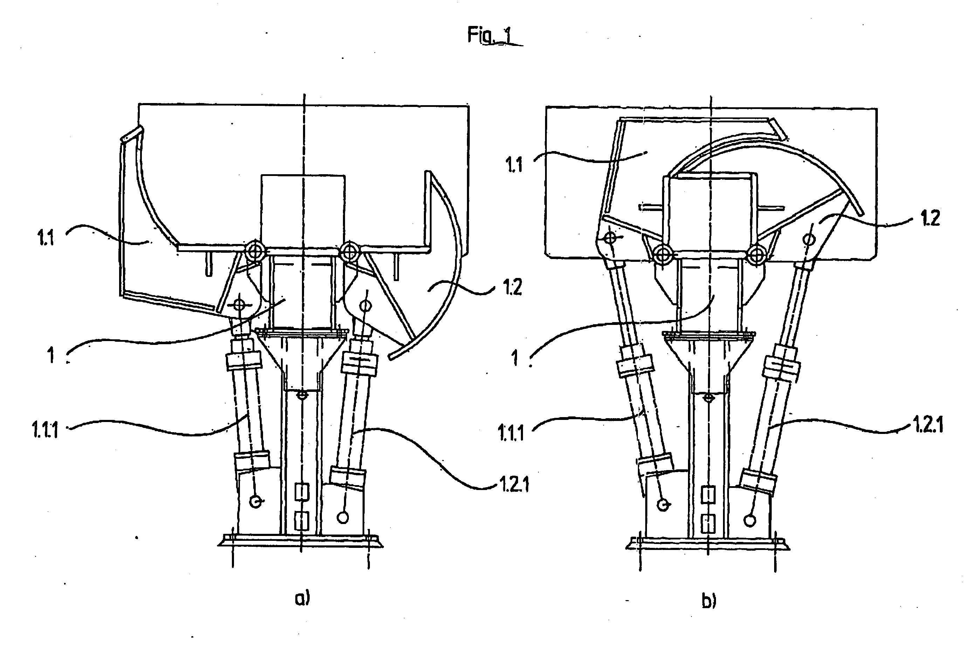

Gemäß Figur 1 ist im Querschnitt ein bekanntes Bett 1 einer Flügelbettpresse/-schere gemäß Stand der Technik dargestellt. In der Position a) ist die Stellung zur Aufnahme eines nicht dargestellten Materials 3 mit je einem ausgeschwenkten Pressflügel 1.1 und Pressdeckel 1.2 und in der Position b) die Stellung mit dem jeweils eingeschwenkten Pressflügel 1.1 und Pressdeckel 1.2 dargestellt, in der das Material 3 zu einem Strang geformt ist. Für das Schwenken und die Ausübung der Presskräfte sind ein erster hydraulischer Zylinder 1.1.1 und ein zweiter hydraulischer Zylinder 1.2.1 vorgesehen.

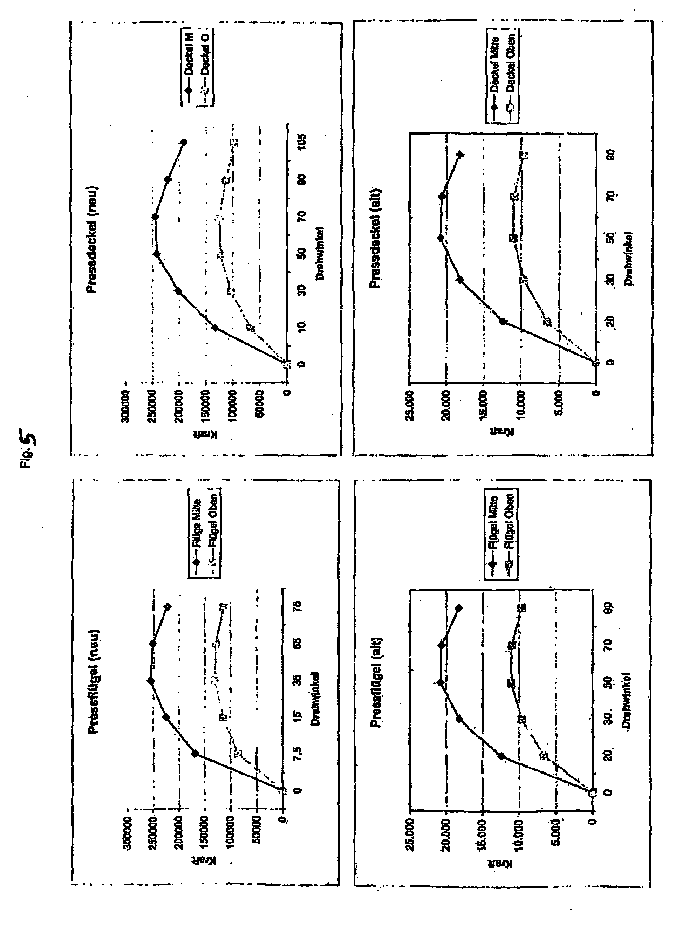

Diese Konstruktion offenbart sowohl bezüglich der Bauart als auch bezüglich des in Figur 5 dargestellten Kräftediagramms Nachteile, insbesondere zu den Funktionsabläufen von Pressflügel 1.1 und Pressdeckel 1.2 sowie der für den Antrieb verantwortlichen hydraulischen Zylinder 1.1 und 1.2.1.

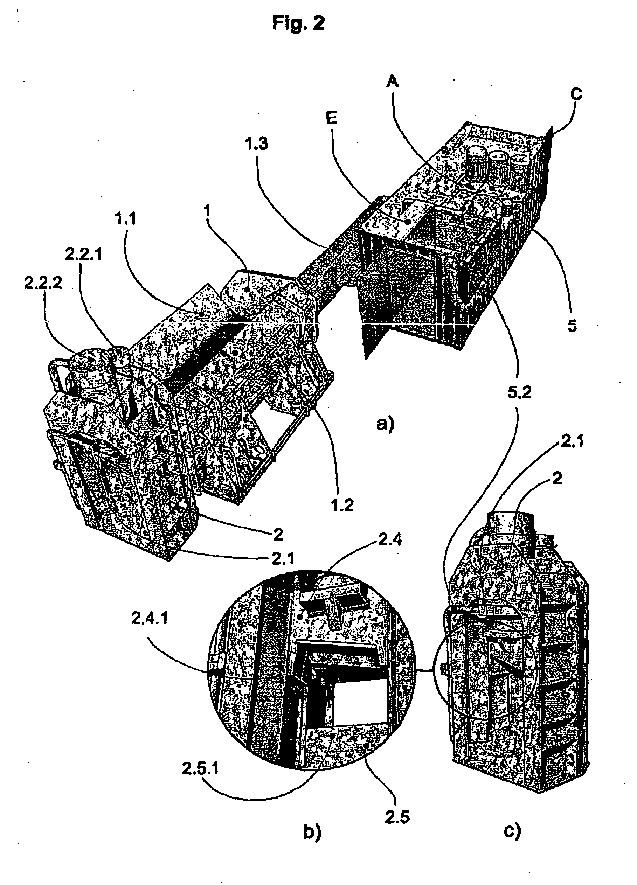

In der Gesamtaufstellung nach Figur 2 ist in der Ansicht a) die komplette Anordnung einer Flügelbettschere mit zugehörigen Baugruppen, wie Ständer 2, Schieber 1.3, Hydrauliksteuerung 5 mit Steuerblock 5.1 und Rohrleitungen 5.2 dargestellt. Die Ansicht b) zeigt dazu ausschnittweise aus dem Ständer 2 der Ansicht c) Einzelheiten wie Messerschlitten 2.4 mit Obermesser 2.4.1 und Tisch 2.5 mit Untermesser 2.5.1

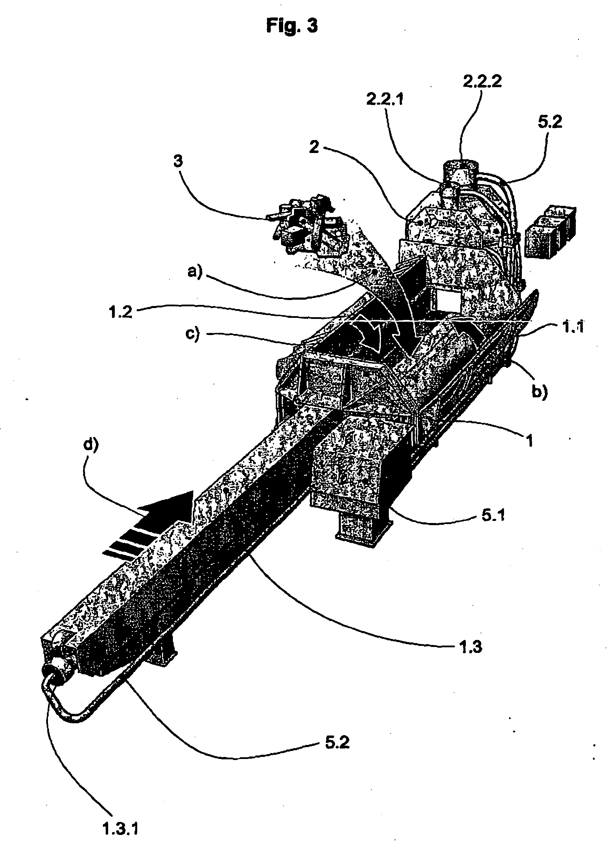

Figur 3 demonstriert die Funktionsabläufe im erfindungsgemäßen Flügelbett, und zwar mit a): durch den senkrechten Pfeil angedeutet, die Beschickung mit Material 3, mit b): durch den waagerechten Pfeil symbolisiert, die dann folgende Schwenkung des Pressflügels 1.1, mit c): angedeutet durch einen nach unten weisenden diagonalen Pfeil, die Schwenkung des Pressdeckels 1.2, wobei ein Strang des Materials 3 geformt wird, und schließlich mit d): dargestellt durch einen weiteren Pfeil, die Vorschubfunktion des Schiebers 1.3, der den Strang des Materials 3 verdichtet und mit dem dritten hydraulischen Zylinder 1.3.1 der Bearbeitung im Ständer 2 zuführt.

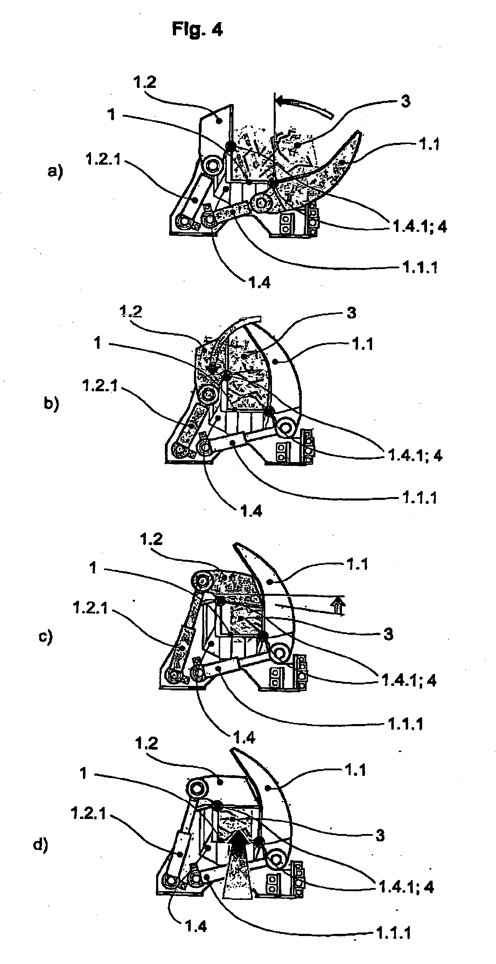

In Figur 4a) ist die Befüllung des Materials 3 dargestellt. Gemäß Position b) wird das Material 3 durch den Pressflügel 1.1 vorverdichtet, bei Position c) mit dem Pressdeckel 1.2 nachverdichtet. Dabei kann ein Überhub des Pressdeckels 1.2 ausgeführt werden, der sich materialabhängig als vorteilhaft erweist. Gemäß Position d) verdichtet der Schieber 1.3 den geformten Strang des Materials 3 weiter in Längsrichtung des Bettes (Anmerkung: Pressdeckel hat Überhub und fährt in die Kontur des Presskanals. Resultat: Vermeidung oder Reduzierung von Kräften zwischen Deckel und Material bei Vorschieben des Schiebers).

Das Bett hat einen im Querschnitt L-förmigen Grundkörper 1.4, an dem in diagonal gegenüberliegend verlaufenden Schwenkachsen 1.4.1 Pressflügel 1.1 und Pressdeckel 1.2 angeordnet sind, und im Wirkungsbereich der Schwenkachsen 1.4.1 Mittel 4 zur Positionierung der jeweiligen Stellung von Pressflügel 1.1 und Deckel 1.2 vorgesehen sind.

Die in den, dem Bett nachgeordneten Ständer 2 integrierten Funktionen werden hier nicht weiter erläutert.

Ein wesentlicher Vorteil der Erfindung kommt besonders zum Ausdruck, wenn man den in Diagrammen dargestellten Vergleich der Wirkung von Pressflügel 1.1 und Pressdeckel 1.2 gegenüber dem Stand der Technik (alt - neu) gemäß Figur 5 heranzieht.

Der Pressflügel 1.1 und der Pressdeckel 1.2 haben entsprechend ihrer Anbringung an den Schwenkachsen 1.4 sowie ihrer Ausbildung als zweiarmige Hebel und Antriebe mittels der ersten und zweiten hydraulischen Zylinder 1.1.1, 1.2.1 eine besonders hochwirksame Presskraftentfaltung, die in der Funktion "Kraft zu Drehwinkel" als Kurvendiagramm dargestellt ist.

Des Weiteren steht der Pressflügel 1.1 nach dem Befüllen des Bettes 1 mit Material 3 und gegebenenfalls nach einem Überhub in einer senkrechten, das Material 3 vorverdichtenden Position und bildet dabei eine nicht bezeichnete Seitenwand des Bettes.

Der zunächst senkrecht stehende Pressdeckel 1.2, gegebenenfalls nach einem Überhub, steht in der Horizontalen und bildet in dieser Stellung zusammen mit dem senkrecht stehenden Pressflügel 1.1 einen, den so geformten Strang des Materials 3 aufnehmenden Querschnitt.

Pressflügel 1.1 und Pressdeckel 1.2 werden zweckmäßig als steifigkeitserhöhende und massereduzierende Hohlprofile ausgebildet, um deren funktionelle Wirkungen zu unterstützen.

Neben einer Hydrauliksteuerung weist die Presse ein Programm auf, welches die Vorwahl der Betriebsart entsprechend den Betriebsarten, insbesondere auch mit "Teil- oder Relativhub" gestattet. Sofern der Schieber 1.3 beim Schub, das heißt bei der Vorwärtsfahrt, blockiert, werden Stampfer 2.2 und Obermesser 2.4.1 in die obere Endlage gefahren, die anstehende, restliche Füllung des Bettes 1 mit Material 3 und die weiteren Funktionsabläufe werden sodann im Modus "Vollhub" gefahren und geschnitten.

Sowohl die Hydrauliksteuerung als auch das Programm zur Vorwahl der Betriebsart nutzen die technischen Mittel 4 zur Positionsortung von Pressflügel 1.1 und Pressdeckel 1.2, die vorzugsweise Winkelcodierer sind, und integrierte Wegmesssysteme für die Ortung der Position des Schiebers 1.3 (dieser auch durch Laserortung) sowie der Funktionen der vierten und fünften hydraulischen Zylinder 2:2.1, 2.2.2 zur Verknüpfung und Koordinierung der Funktionsabläufe der agierenden Bauteile wie Pressflügel 1.1, Pressdeckel 1.2, Schieber 1.3, Stampfer 2.2 und Zerkleinerungswerkzeuge beziehungsweise Obermesser 2.4.1.

## Patentansprüche

1. Presse zum Bearbeiten von Material (3) beliebiger Art, insbesondere Metallschrott oder -abfälle, umfassend ein Bett (1) mit je mindestens einem schwenkbaren Pressflügel (1.1) oder Pressdeckel (1.2) zum Auffüllen und strangartigen Verdichten sowie Zuführen des Materials (3) mittels Schieber (1.3) zur weiteren Bearbeitung wie Pressen und/oder Scheren, mit drei hydraulischen Zylindern (1.1.1, 1.2.1, 1.3.1) zum Antrieb von Pressflügel (1.1), Pressdeckel (1.2) und Schieber (1.3), **dadurch gekennzeichnet, dass** das Bett (1) einen im Querschnitt L-förmigen Grundkörper (1.4) aufweist, an welchem in diagonal gegenüberliegend verlaufenden Schwenkachsen (1.4.1) Pressflügel (1.1) und Pressdeckel (1.2) angeordnet sind, und im Wirkungsbereich der Schwenkachsen (1.4.1) Mittel (4) zur Positionsortung der jeweiligen Stellung von Pressflügel (1.1) und Pressedeckel (1.2) vorgesehen sind.

2. Presse nach Anspruch 1, **dadurch gekennzeichnet, dass** die Mittel (4) zur Positionsortung der jeweiligen Stellung von Pressflügel (1.1) und Pressdeckel (1.2) Winkelcodierer sind.

## Claims

1. Press for processing material (3) of any desired type, in particular metal scrap or waste, comprising a bed (1) with in each case at least one pivotable press blade (1.1) or press cover (1.2) for filling and strand-like compression as well as delivery of the material (3) by means of a slide (1.3) for further processing such as pressing and/or shearing, comprising three hydraulic cylinders (1.1.1, 1.2.1. 1.3.1) for driving the press blade (1.1), press cover (1.2) and slide (1.3), **characterised in that** the bed (1) comprises a basic body (1.4) which has an L-shaped cross section and pivot pins (1.4.1), extending diagonally opposite one another, for the press blade (1.1) and press cover (1.2), and means (4) for detecting the respective location of the press blade (1.1) and press cover (1.2) are provided in the range of action of the pivot pins (1.4.1).

2. Press according to Claim 1, **characterised in that** the means (4) for locating the respective position of the press blade (1.1) and press cover (1.2) are angle encoders.

## Revendications

1. Presse pour le travail de matériau (3) de tout type, en particulier de la ferraille ou des déchets métalliques, comprenant un lit (1) avec respectivement au moins une aile de compression basculante (1.1) ou un couvercle de compression (1.2) pour le remplissage et la compression de type continue ainsi que l'amenée du matériau (3) au moyen de poussoirs (1.3) pour le traitement ultérieur comme presser age et/ou cisaillier, avec trois cylindres hydrauliques (1.1.1, 1.2.1, 1.3.1) pour l'entrainement des ailes de compression (1.1), du couvercle de compression (1.2) et des poussoirs (1.3), **caractérisée en ce que** le lit (1) présente un corps de base (1.4) de section transversale en L, sur lequel les ailes de compression (1.1) et le couvercle de compression (1.2) sont placés sur des axes de bascule (1.4.1) diagonalement opposés et des moyens (4) pour la localisation de la position de chaque position des ailes de compression (1.1) et du couvercle de compression (1.2) sont prévus au niveau d'action des axes de bascule (1.4.1).

2. Presse selon la revendication 1, **caractérisée en ce que** les moyens (4) pour la localisation de la position de chaque position des ailes de compression (1.1) et du couvercle de compression (1.2) sont des codeurs angulaires.
